**Europäisches Patentamt**

**European Patent Office**

**Office européen des brevets**

(11) Numéro de publication : **0 345 130 B1**

# (12) FASCICULE DE BREVET EUROPEEN

(45) Date de publication du fascicule du brevet :
**25.11.92 Bulletin 92/48**

(51) Int. Cl.⁵ : **C09J 7/02,** G09F 3/02

(21) Numéro de dépôt : **89401447.1**

(22) Date de dépôt : **26.05.89**

(54) **Support d'information autoadhésif de sécurité et son application à l'infalsification de documents.**

(30) Priorité : **31.05.88 FR 8807197**

(43) Date de publication de la demande :
**06.12.89 Bulletin 89/49**

(45) Mention de la délivrance du brevet :
**25.11.92 Bulletin 92/48**

(84) Etats contractants désignés :
**AT BE CH DE ES FR GB GR IT LI LU NL SE**

(56) Documents cités :
**EP-A- 0 174 885**
**US-A- 3 623 944**

(73) Titulaire : **ARJO WIGGINS S.A.**
**3, rue du Pont de Lodi**
**F-75006 Paris (FR)**

(72) Inventeur : **Camus, Michel**
**Le Guillermet**
**F-38850 Charavines (FR)**
Inventeur : **Menez, Jean-Paul**
**18, rue d'Anthony**
**F-91370 Verrieres le Buisson (FR)**

(74) Mandataire : **Daudens, Michèle**
**Société ARJO WIGGINS S.A., 3, rue du Pont de Lodi**
**F-75006 Paris (FR)**

Jouve, 18, rue Saint-Denis, 75001 PARIS

EP 0 345 130 B1

## Description

L'invention concerne un support d'information auto-adhésif de sécurité et plus particulièrement un papier adhésif par pression, destiné notamment à recevoir une impression et/ou une écriture, par exemple pouvant être un visa.

On connaît déjà des films transparents auto-adhésifs qui sont utilisés pour protéger des supports d'information tels que des photographies, des signatures apposées sur des pages de passeport ou des cartes d'identité. De tels films sont décrits dans les documents suivants : GB-A-2 128 581, GB-A-615 666, GB-A-2 013 571 et GB-A-1 589 395. Ces films sont transparents et sont réalisés en feuilles de matière plastique. Ils ont pour fonction essentielle de protéger l'information tout en la laissant visible. Ils comportent une impression invisible en lumière naturelle, cette impression étant recouverte d'une couche d'adhésif sensible à la pression. Par exemple, l'impression a une plus grande affinité pour l'adhésif que pour le film plastique. Ainsi, lorsque le film est collé sur une information et qu'un contrefacteur essaye d'enlever le film pour modifier l'information, il y a délamination de l'adhésif et du film, l'impression restant sur le support d'information et celui ne pouvant plus être réutilisé par le contrefacteur.

Ces films plastiques connus de la technique antérieure permettent donc de protéger des supports d'information tels que des photographies ou des signature apposées par exemple sur un passeport ou sur toute autre pièce officielle et permettent d'éviter que le contrefacteur n'enlève ces photographies pour les remplacer par d'autres et/ou modifie les mentions variables (nom, âge, signature).

Le brevet U.S. 3 623 944 décrit un film polymère friable auto-adhésif permettant de sécuriser un substrat. Le film et l'adhésif doivent être choisis tels que la résistance à la déchirure du film soit inférieure à la force d'adhésion entre l'adhésif et le substrat. La destruction partielle (ou totale) lors de l'arrachage du film friable montre la tentative de falsification du substrat. Cependant, un tel moyen de sécurité présente plusieurs inconvénients :

- à la fois, le film polymère et l'adhésif doivent avoir des compositions très particulières,
- ils sont réalisés en milieu solvant, ce qui entraîne, en dehors des problèmes bien connus liés à l'emploi de solvants (coût, toxicité, explosions), que le film auto-adhésif ne peut être que très partiellement sécurisé lui-même.

En effet, ce film ne peut pas comporter certains agents d'infalsification employés dans les documents de sécurité, en particulier ceux réagissant aux solvants. Ce film auto-adhésif peut donc être falsifié. De plus, il peut être décollé en dissolvant l'adhésif par le solvant utilisé lors de sa préparation.

La présente invention a un but totalement différent.

Un but de l'invention est de fournir un support d'information de sécurité qui ne soit pas contrefaisable.

Un deuxième but de l'invention est de fournir un support d'information qui, lorsqu'il a reçu une impression et/ou une écriture et lorsqu'il est placé sur un substrat organique tel qu'une page de passeport ou une carte d'identité, ne peut plus être enlevé par les contrefacteurs.

Un autre but de l'invention est de fournir un support d'information destiné à recevoir une impression et/ou une écriture, cette impression et/ou écriture ne pouvant être falsifiée.

Un autre but de l'invention est de pouvoir sécuriser localement un document qui n'était pas prévu à cet effet.

On sait en effet que sur les passeports on appose très souvent à l'aide de tampons, des visas, des marques et autres signes. Jusqu'à présent, les contrefacteurs pouvaient très facilement modifier l'impression ou l'écriture portée sur un tel substrat. Ils pouvaient aussi très facilement apposer une impression sur le substrat en fabriquant de faux tampons.

L'invention vise donc à fournir un moyen empêchant la falsification des visas apposés sur des substrats, notamment des pages de passeport ou des cartes d'identité.

L'invention concerne un support d'information auto-adhesif de sécurité destiné à être placé sur un substrat organique et à recevoir une impression et/ou une écriture. Ce support d'information est une structure plane, flexible, de sécurité, comprenant des moyens de sécurisation, imprimable, recouverte d'une couche d'adhésif sensible à la pression ; la couche d'adhésif et la structure plane étant telles que le support auto-adhesif de sécurité ne peut être désolidarisé du substrat sans destruction au moins partielle du substrat et éventuellement de la structure plane. Ainsi, lorsque le support d'information est placé sur un substrat, l'enlèvement mécanique du support entraîne la délamination du substrat et/ou une déchirure de la structure plane.

Selon un mode de réalisation de l'invention, la structure plane de sécurité est une structure partiellement ou totalement fibreuse, par exemple une feuille constituée de fibres naturelles et/ou synthétiques et plus préférentiellement une feuille de papier obtenue par voie humide. La structure plane peut être un composite et comporter au moins une feuille fibreuse associée à au moins une feuille continue, par exemple une feuille de matière plastique. Cette structure plane peut par exemple être constituée d'une feuille de matière plastique

2

revêtue sur au moins une face d'une couche composée de liants et de pigments.

Selon un mode particulier de l'invention, la couche d'adhésif est partiellement absorbée dans l'épaisseur de la structure plane.

Selon un autre mode de réalisation de l'invention, la structure plane est une feuille de fibres naturelles et/ou synthétiques dont le degré de collage impression écriture est de 5.

Différents moyens peuvent être utilisés selon l'invention pour sécuriser la structure plane.

Selon encore un premier mode de sécurisation, la structure plane est une feuille de papier de sécurité comportant un moyen de sécurité choisi parmi les fils et fibres de sécurité, les planchettes, les filigranes.

Selon encore un autre mode de sécurisation, la structure plane est un papier qui prend une teinte différente de sa teinte d'origine si on le soumet à l'action d'une base, d'un acide, d'un couple oxydo-réducteur, à l'eau, à l'hypochlorite de sodium, aux solvants.

Selon une autre variante de sécurisation, la structure plane comporte une couche colorée réactive à l'action d'une base, d'un acide ou de l'eau.

Selon encore une autre variante de réalisation de l'invention, l'adhésif est un adhésif qui permet l'adhérence de la structure plane sur le substrat en une durée de temps de quelques minutes à 5 h.

Selon encore une autre variante de réalisation de l'invention, l'adhésif est recouvert d'une feuille anti-adhérente.

De préférence, la couche d'adhésif est absorbée dans environ le tiers de l'épaisseur de la structure plane.

Il est en effet nécessaire, selon l'invention, que la couche d'adhésif n'ait pénétré que superficiellement et non totalement dans l'épaisseur de la structure plane fibreuse. Une pénétration de l'adhésif dans la totalité de la structure plane entraînerait une cohésion trop importante de celle-ci. Lorsque le support d'information est imprimé, puis placé sur un substrat, un but de l'invention est que le support d'information ne puisse pas être dissocié du substrat et que lors d'une tentative d'enlèvement mécanique du support d'information par un contrefacteur, la cohésion de la structure fibreuse étant faible, cette structure se délamine.

Le support d'information peut par exemple être un papier très collé, ce collage évitant que l'adhésif déposé sur le support d'information ne soit absorbé totalement dans l'épaisseur de ce dernier. Le degré de collage peut être un degré de collage écriture n° 5 selon la norme française AFNOR Q03-015 incorporée ici par référence, qui est similaire à la norme américaine TAPPI "size test for paper by ink resistance" qui est également incorporée ici par référence.

La norme AFNOR Q03-015 consiste à tracer des traits sur un papier avec des solutions colorées de plus en plus agressives.

Les plus agressives de ces solutions qui permettent l'exécution de traits sans bavure et sans transpercement sont considérées comme caractérisant le degré de collage écriture du papier étudié. Les compositions des solutions à utiliser sont fixées dans le tableau suivant :

| N° DES SOLUTIONS COLOREES DANS L'ORDRE CROISSANT D'AGRESSIVITE | COMPOSITION DES SOLUTIONS | |
|---|---|---|
| | CI 74 180 | CI 42 045 |
| | EN GRAMMES PAR LITRE | |
| 1 | 10 | 0 |
| 2 | 7,5 | 2,5 |
| 3 | 5 | 5 |
| 4 | 2,5 | 7,5 |
| 5 | 0 | 10 |

Les réactifs employés sont des solutions de colorants suivants :

colorant direct : color index CI 74 180 (colorant peu agressif). Ce colorant peut par exemple être vendu par ICI Francolor sous le nom de Turquoise diazole lumière JLS.

Colorant acide : color index CI 42 045 (colorant très agressif). Ce colorant peut par exemple être vendu par ICI Francolor sous le nom de Bleu sulfacide brillant 6J.

Les solutions numérotées 1 à 5 de chacun des deux colorants sont préparées par dissolution dans de l'eau distillée et on ajoute à chaque solution un gramme au litre de phénol dilué.

On prépare ensuite des éprouvettes de papier que l'on conditionne dans une atmosphère spécifiée dans la norme française AFNOR Q03-010. Puis, on effectue sur chacune des faces des éprouvettes un tracé avec la série des solutions colorées. Ce tracé est l'ensemble de six traits croisés. On observe ensuite pour chaque face de chaque éprouvette le numéro de la solution la plus agressive ne bavant pas et le numéro de la solution la plus agressive ne traversant pas le papier. Les numéros ainsi retenus constituent le résultat pour les éprouvettes.

Selon un mode de réalisation de l'invention, la structure plane fibreuse est un papier de sécurité tel que lorsqu'un contre-facteur essaye d'effacer l'impression par une méthode couramment utilisée (hypochlorite de sodium, combinaison oxydo-réductrice, bases, acides et solvants) il prend une teinte différente de sa teinte d'origine.

Ainsi, si le contrefacteur essaye d'arracher un tel papier auto-adhésif de sécurité, il arrache le substrat et/ou support d'information et, s'il essaye d'effacer l'impression pour en apposer une autre, le papier de sécurité constituant le support d'information se tache.

De préférence, le support d'information comporte des fils ou fibres dans sa masse, ceux-ci étant par exemple fluorescents. Il peut comporter aussi des planchettes, c'est-à-dire de minuscules confettis ou des filigranes clairs, sombres ou grisés.

Le papier peut être un papier de sécurité du type de celui décrit et revendiqué dans la demande européenne de la demanderesse EP-A-0 174 885. Il peut comporter aussi une couche colorée obtenue par couchage du papier sur une face, la sauce de couchage étant colorée par un colorant réactif aux acides, aux bases ou encore à l'eau.

De préférence, l'adhésif utilisé est un adhésif acrylique en émulsion aqueuse, réticulé. Cet adhésif doit avoir en même temps trois caractéristiques principales : une bonne adhérence, un bon tack (pouvoir collant immédiat) et une bonne cohésion interne. On peut réaliser cet adhésif en mélangeant un copolymère acrylique du type ACRONAL V 205 ®, vendu par BASF, qui apporte le tack, un polyacrylat du type ACRONAL 290 D ®, vendu par BASF, et une colophane en émulsion du type DERMULSEN 511 ®, vendu par DRT (France) ; ces deux derniers composants apportant l'adhérence et la cohésion interne. Les quantités relatives de ces composants seront réglées par l'homme du métier, selon les caractéristiques voulues par le produit fini. On peut également y ajouter les additifs servant à régler la rhéologie qui sont couramment utilisés par l'homme du métier.

L'ACRONAL V 205 ® est une dispersion aqueuse anionique d'un copolymère d'esters acryliques à groupes carboxyliques. Il comprend 70 ± 1 % d'extrait sec.

L'ACRONAL 290 D ® est une dispersion aqueuse d'un copolymère d'acrylate et de styrène. Il comprend 50 ± 1 % d'extrait sec.

Le DERMULSEN 511 ® est une dispersion aqueuse d'une colophane modifiée, à 55 ± 1 % d'extrait sec.

La description suivante en regard des dessins annexés permettra de comprendre comment l'invention peut être mise en pratique.

- La figure 1 est une vue en perspective d'un mode de réalisation du support d'information auto-adhésif de sécurité selon l'invention.

- La figure 2 est une vue en perspective du support d'information de la figure 1 sur lequel on a apposé une impression.

- La figure 3 est une vue en coupe selon la ligne AA du support d'information représenté sur la figure 2.

- La figure 4 montre le support d'information selon l'invention, placé sur un substrat, par exemple une feuille de passeport.

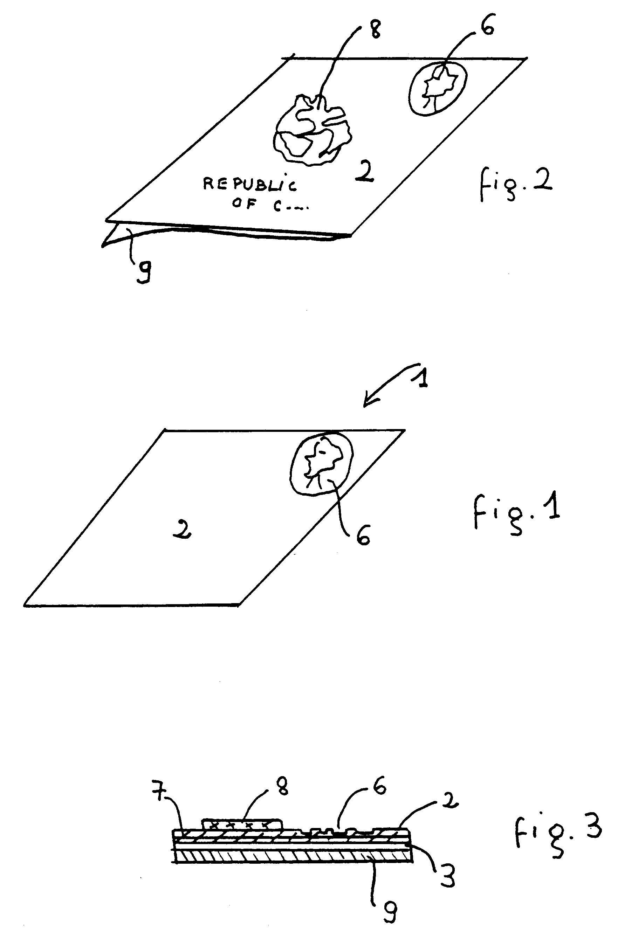

Le support d'information auto-adhésif 1 de sécurité selon l'invention, et représenté sur la figure 1, est constitué d'une structure plane 2, flexible, imprimable qui peut être constituée de fibres cellulosiques et/ou synthétiques. Cette structure plane 2 peut aussi être en tout autre matière imprimable, à condition qu'elle soit plus ou moins poreuse. La structure plane 2 est recouverte d'une couche d'adhésif 3. La caractéristique essentielle du support d'information selon l'invention est que la structure plane est une feuille qui autorise une pénétration partielle de l'adhésif dans l'épaisseur de la structure plane.

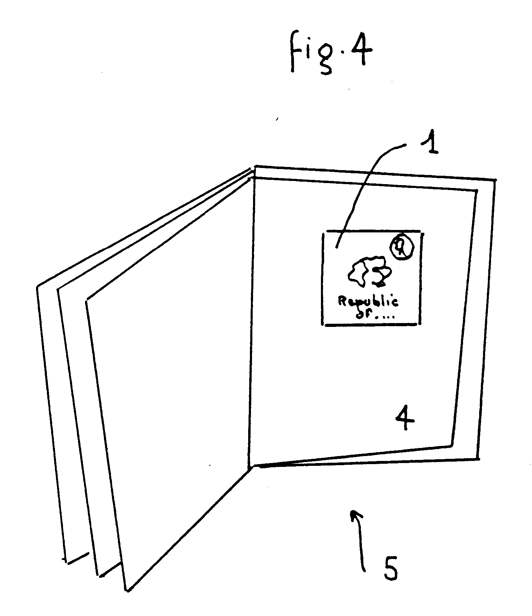

Selon l'invention, la structure plane qui peut être constituée par du papier comporte en outre deux autres caractéristiques. D'une part, l'adhésif 3 est tel que, lorsque le support auto-adhésif 1 est placé sur un substrat 4 (figure 4), par exemple sur une page de passeport 5, l'enlèvement mécanique du support 1 entraîne la délamination et la déchirure du substrat 4 et/ou de la structure plane 2. Ainsi, un contrefacteur qui essayerait de récupérer un passeport 5, et pour ce faire tenterait d'enlever le support auto-adhésif 1, délaminerait le substrat 4 et donc la page du passeport 5. Celui-ci ne serait donc plus réutilisable. Le contrefacteur délaminerait aussi la structure plane 2 qui ne pourrait plus être apposée de nouveau sur un substrat 4.

Le support auto-adhésif 1 peut être constitué d'une structure plane 2 qui est un papier de sécurité. Par papier de sécurité, on entend un papier qui comporte des fils ou fibres dans sa masse, par exemple des fils ou fibres fluorescents, des planchettes ou des filigranes. De tels papiers sont difficiles à reproduire par un contrefacteur.

Sur les figures, on a représenté une structure plane 2 qui est un papier de sécurité et qui comporte un filigrane 6. En outre, sur la figure 3, on a représenté une structure plane 2 qui est un papier de sécurité qui comporte un fil 7 de sécurité.

Selon un mode de réalisation, la structure plane 2 est un papier de sécurité qui est tel que, lorsque l'on essaye d'effacer l'impression par de l'hypochlorite de sodium ou une combinaison oxydo-réductrice du type "Corector", ou des acides, des bases, des solvants, etc, il prend une teinte différente de sa teinte d'origine.

En effet, cette structure plane 2 est destinée à recevoir une impression 8, par exemple un visa. Il faut donc éviter que les contrefacteurs n'essaient d'effacer et/ou de modifier cette impression 8. Ainsi, lorsque la structure plane 2 est soumise à une action chimique, elle peut prendre une teinte différente de sa teinte d'origine.

La structure plane 2 ou papier de sécurité 6 peut comporter aussi une couche colorée en surface, par exemple une couche déposée à l'aide d'une coucheuse classique.

Enfin, le support auto-adhésif 1 selon l'invention peut être muni d'un revêtement 9 anti-adhérent placé sur l'adhésif 3.

Le mode d'utilisation du support auto-adhésif de sécurité 1 est le suivant :

le support 1 (figure 1) est imprimé pour comporter une impression 8, par exemple un visa. Puis, l'utilisateur décolle le revêtement 9 anti-adhérent et colle le support 1 sur le substrat 4 qui est une feuille du passeport 5. On voit donc que l'impression 8 est externe et n'est pas comprise entre le substrat 4 et la structure plane fibreuse 2.

De préférence, on choisit un adhésif 3 qui est résistant à la chaleur.

De plus, on peut choisir un adhésif 3 qui permet d'obtenir l'adhérence maximale de la structure fibreuse 2 sur le substrat 4 de passeport dans une durée de 5 h maximum, mais l'adhésif est de préférence choisi pour permettre une adhérence suffisamment élevée en quelques minutes. En effet, la structure plane 2 ou la feuille de papier doit rapidement adhérer au substrat 4. Ainsi, après quelques heures, lorsqu'un contrefacteur essaye d'enlever la structure plane 2 du substrat 4, celui-ci se délamine, et de même la structure fibreuse se délamine. L'ensemble n'est donc plus réutilisable par un contrefacteur.

On prépare le support d'information 1 auto-adhésif de sécurité selon l'invention de la manière suivante.

## EXEMPLE COMPARATIF

On prépare un adhésif en émulsion aqueuse selon la composition suivante, les quantités étant exprimées en parties en poids.

```
- ACRONAL V 205, vendu par BASF,
  à environ 70 % d'extrait sec              78
- ACRONAL 290 D, vendu par BASF,
  à environ 50 % d'extrait sec              22
- DERMULSEN 511, vendu par DRT (France)
  à environ 55 % d'extrait sec               5
```

On dépose l'adhésif obtenu en dispersion aqueuse sur un papier anti-adhérent. On sèche, puis on contrecolle par pression la structure plane. Cette structure plane est un papier de sécurité tel que mentionné ci-dessus.

Si on découpe le produit ainsi obtenu, qu'on le colle sur un substrat 4, par exemple une feuille de passeport, et que l'on essaye d'enlever mécaniquement la structure plane, ceci n'a pas pour conséquence d'entraîner la délamination de cette structure plane, mais par contre l'adhésif se désolidarise du substrat.

Ainsi, ce mode de préparation ne permet pas de réaliser le but auquel l'invention souhaite parvenir. En effet, la masse adhésive n'a pas pu pénétrer suffisamment dans l'épaisseur de la structure plane.

## EXEMPLE SELON L'INVENTION

On utilise un adhésif acrylique en dispersion aqueuse obtenu précédemment que l'on dépose sur une structure plane fibreuse 2 pour obtenir un dépôt compris entre 20 et 45 g d'adhésif sec/$m^2$ de structure plane

2. Cette structure plane 2 est de préférence un papier de sécurité ayant un poids de 65 g/m$^2$. Puis, on contrecolle, après séchage de la masse adhésive, un papier anti-adhérent. Lorsqu'on utilise un tel support d'information auto-adhésif, c'est-à-dire que lorsqu'on enlève le papier anti-adhérent, puis que l'on colle la structure plane 2 sur un substrat 4, si l'on veut enlever mécaniquement cette structure plane, elle se délamine et/ou le substrat 4 se délamine lui aussi.

**Revendications**

1. Support auto-adhésif (1) de sécurité destiné à être placé sur un substrat organique (4), caractérisé en ce qu'il est constitué d'au moins une structure plane (2) de sécurité comprenant des moyens de sécurisation, imprimable, poreuse, comprenant des fibres naturelles et/ou synthétiques et d'une couche d'adhésif (3) sensible à la pression, partiellement absorbée dans l'épaisseur de la structure plane (2).

2. Support auto-adhésif selon la revendication 1, caractérisé en ce que la structure plane (2) est une feuille de fibres naturelles et/ou synthétiques dont le degré de collage impression écriture est de 5.

3. Support auto-adhésif selon l'une des revendications 1 et 2, caractérisé en ce que lesdits moyens de sécurisation résident dans le fait que la structure (2) est une feuille de papier de sécurité comportant des fils ou des fibres de sécurité, des planchettes, ou des filigranes.

4. Support auto-adhésif selon l'une des revendications 1 à 3, caractérisé en ce que le moyen de sécurisation réside dans le fait que la structure plane (2) est un papier qui prend une teinte différente de sa teinte d'origine si on le soumet à l'action d'une base, d'un acide, d'un couple oxydo-réducteur, à l'eau, à l'hypochlorite de sodium, aux solvants.

5. Support auto-adhésif selon l'une des revendications 1 à 4, caractérisé en ce que le moyen de sécurisation réside dans le fait que la structure plane (2) comporte une couche colorée réactive à l'action d'une base, d'un acide ou de l'eau.

6. Support auto-adhésif selon l'une des revendications 1 à 5, caractérisé en ce que l'adhésif est un adhésif qui permet l'adhérence de la structure plane (2) sur le substrat (4) en une durée de temps de quelques minutes à 5 h.

7. Support auto-adhésif selon l'une des revendications 1 à 6, caractérisé en ce que l'adhésif est recouvert d'une feuille anti-adhérente.

**Patentansprüche**

1. Selbstklebender Sicherheitsstreifen (1), der dazu bestimmt ist, auf ein organisches Substrat (4) aufgebracht zu werden, dadurch gekennzeichnet, daß er mindestens aus einem flachen Sicherheitsteil (2), das Sicherungsmittel umfaßt, bedruckbar und porös ist und natürliche und bzw. oder künstliche Fasern enthält, sowie einer Klebstoffschicht (3) besteht, die druckempfindlich und in der Dicke des flachen Teils (2) teilweise absorbiert ist.

2. Selbstklebender Streifen gemäß Anspruch 1, dadurch gekennzeichnet, daß das flache Teil (2) ein Blatt aus natürlichen und bzw. oder künstlichen Fasern ist, dessen Leimungsgrad für Druck und Schrift 5 beträgt.

3. Selbstklebender Streifen gemäß einem der Ansprüche 1 oder 2, dadurch gekennzeichnet, daß die Sicherungsmittel daraus bestehen, daß das Teil (2) ein Blatt aus Sicherheitspapier ist, das Sicherheitsfäden oder -fasern, -plättchen oder Wasserzeichen umfaßt.

4. Selbstklebender Streifen gemäß einem der Ansprüche 1 bis 3, dadurch gekennzeichnet, daß das Sicherungsmittel daraus besteht, daß das flache Teil (2) ein Papier ist, das einen unterschiedlichen Farbton im Vergleich zu seinem ursprünglichen Farbton annimmt, wenn man es der Einwirkung einer Base, einer Säure, eines Redoxpaares oder von Wasser, Natriumhypochlorit oder Lösungsmitteln unterwirft.

5. Selbstklebender Streifen gemäß einem der Ansprüche 1 bis 4, dadurch gekennzeichnet, daß das Sicherungsmittel daraus besteht, daß das flache Teil (2) eine gefärbte Schicht umfaßt, die auf die Einwirkung einer Base, einer Säure oder von Wasser reagiert.

6. Selbstklebender Streifen gemäß einem der Ansprüche 1 bis 5, dadurch gekennzeichnet, daß der Klebstoff ein solcher ist, der das Festheften des flachen Teils (2) an das Substrat (4) in einigen Minuten bis fünf Stunden erlaubt.

7. Selbstklebender Streifen gemäß einem der Ansprüche 1 bis 6, dadurch gekennzeichnet, daß der Klebstoff mit einem nicht haftenden Blatt abgedeckt ist.

## Claims

1. Self-adhesive tamper-proof medium (1) intended to be placed on an organic substrate (4), characterized in that it is formed of at least one printable, porous tamper-proof planar structure (2) having safety means, including natural and/or synthetic fibers and of a pressure-sensitive adhesive layer (3) which is partially absorbed in the thickness of the planar structure (2).

2. Self-adhesive medium according to claim 1, characterized in that the planar structure (2) is a sheet of natural and/or synthetic fibres whose sizing degree is equal to 5.

3. Self-adhesive medium according to any one of claims 1 to 2, characterized in that said safety means lie in the fact that the structure (2) is a sheet of tamper-proof paper having security threads or fibres, interrupted patterns or watermarks.

4. Self-adhesive medium according to one of claims 1 to 3, characterized in that the safety means lies in the fact that the planar structure (2) is a paper that takes on a colour different to its original colour if it Is submitted to the action of an alkali, an acid, an oxydoreduction couple, water, sodium hypochlorite, or solvents.

5. Self-adhesive medium according to one of claims 1 to 4, characterized in that the safety means lies in the fact that the planar structure (2) includes a coloured layer that is reactive to the action of an alkali, an acid or water.

6. Self-adhesive medium according to one of claims 1 to 5, characterized in that the adhesive is an adhesive that allows the adhesion of the planar structure (2) on the substrate (4) in a time period from a few minutes to five hours.

7. Self-adhesive medium according to one of claims 1 to 6, characterized in that the adhesive is overlaid with an anti-adhesion sheet.

fig.2

fig.1

fig.3

fig.4